# EUROPEAN PATENT APPLICATION

(11) **EP 2 985 110 A1**
(43) Date of publication of application: **17.02.2016**
(21) Application number: 14801904.5
(22) Date of filing: 11.06.2014
(51) Int. Cl.: B23K 11/30

(54) **CHIP COLLECTION DEVICE**

(71) Applicant: Kyokutoh Co., Ltd., Nagoya-shi, Aichi 458-0808 (JP)
(72) Inventor: KUSANO, Hirokazu, Aichi 458-0808 (JP)
(74) Representative: BRP Renaud & Partner mbB Rechtsanwälte Patentanwälte Steuerberater
(86) International application number: PCT/JP2014/003110
(87) International publication number: WO 2015/189872

(57) **Abstract**

A low cost chip collector with high chip collection performance includes a cover case 2. The cover case 2 includes a holding part 2a and a discharge hole 23a discharging air in the holding part 2a. An air suction device 7 discharges compressed air through a discharge opening 53. The air suction device 7 places a part, of the discharge hole 23a, near the holding part 2a. The air suction device 7 sucks air in the holding part 2a. The discharges the air through the discharge hole 23a. A first ring-shaped protrusion 51 is provided on a part, of the discharge opening 53, near holding part 2a, protrudes in a direction away from the holding part 2a, and covers the discharge opening 53.

## Description

### TECHNICAL FIELD

The present disclosure relates to chip collectors that collect chips generated when an end of an electrode tip for spot welding is cut by a tip dresser.

### BACKGROUND ART

In a typical production line of vehicles, the spot welding is used on many occasions for assembly of vehicle bodies. If the spot welding is repeated, an oxide film sticks to an end of an electrode tip, and the welding conducted in this condition degrades the welding portion. Thus, it is necessary to regularly cut the end of the electrode tip with a tip dresser to remove the oxide film.

The chips generated when the tip dresser cuts the electrode tip sometimes stick to an actuator of a device. These chips increase the load applied on the actuator. At worst, the device might get broken. Thus, it is preferable to collect the chips just after they are generated.

For example, PATENT DOCUMENT 1 discloses a chip collector that includes a cover case having a holding part for a tip dresser. The cover case is connected with one end of the suction pipe. The other end of the suction pipe is connected with a chip collection box. The suction pipe has a middle portion connected with an ejector pump. The ejector pump forces air out of the holding part, and moves the air and the chips together to the chip collection box.

### CITATION LIST

### PATENT DOCUMENT

PATENT DOCUMENT 1: Japanese Unexamined Patent Publication No. 2004-230428

### SUMMARY OF THE INVENTION

### TECHNICAL PROBLEM

In general, the electrode tip is made of a copper material, which is a relatively soft metal. The chips generated when the tip dresser cuts the electrode tip are likely to be continuous with one another without break. Thus, if the chips stick to, e.g., a cutting edge of the tip dresser, and are not collected in a chip collection box, the cutting performance of the tip dresser is decreased.

To avoid this problem, the ejector pump might be replaced with one having high chip suction performance. However, this results in an increase in the equipment cost.

It is an object of the present disclosure to provide a low cost chip collector with high chip collection performance.

### SOLUTION TO THE PROBLEM

To achieve the object, the present disclosure provides an improved shape of a suction part in a cover case.

Specifically, the present disclosure relates to a chip collector for collecting chips generated when an end of an electrode tip for spot welding is cut by a cutting edge of a tip dresser. The present disclosure provides the following solutions.

Specifically, according to a first aspect of the present disclosure, a chip collector includes a cover case, an air suction device, and a chip collection device. The cover case includes a holding part and a discharge hole. The holding part holds the tip dresser. The discharge hole communicates with the holding part, and discharges air in the holding part. The air suction device includes a discharge opening through which compressed air is discharged, and which is disposed on an inner surface of the discharge hole. The air suction device discharges the compressed air through the discharge opening in a direction away from the holding part along the discharge hole. The air suction device places a part, of the discharge hole, near the holding part under negative pressure. The air suction device sucks the air in the holding part. The air suction device discharges the air through the discharge hole. The chip collection device is connected with the discharge hole. The chip collection device collects chips that move with the air sucked by the air suction device. A ring-shaped protrusion is provided on a part, of the inner surface of the discharge hole, from the discharge opening toward the holding part. The ring-shaped protrusion protrudes in a direction away from the holding part. The ring-shaped protrusion covers the discharge opening.

According to a second aspect of the present disclosure, the ring-shaped protrusion of the first aspect of the present disclosure is tapered and sharp-pointed.

According to a third aspect of the present disclosure, the cover case of the first or second aspect of the present disclosure includes a through hole formation part having a through hole through which the electrode tip can pass. The through hole is in a position corresponding to the cutting edge. The through hole formation part is made of flame-resistant, flexible resin sheet material.

According to a fourth aspect of the present disclosure, the chip collector of the third aspect of the present disclosure includes cover brushes. The cover brushes are provided on a surface, of the through hole formation part, remote from the holding part. The cover brushes each include a base part and a brush part attached to the base part. The brush part extends along a direction that intersects a direction along which the through hole passes. The brush part covers the through hole.

According to a fifth aspect of the present disclosure, the cover brush of the fourth aspect of the present disclosure are provided in a pair so that a part, of the brush part of one of the cover brushes, remote from the base part faces a part, of the brush part of the other one of the cover brushes, remote from the base part, and portions of the brush parts facing each other correspond to the through hole.

### ADVANTAGES OF THE INVENTION

According to the first aspect of the present disclosure, the ring-shaped protrusion covers the discharge opening. Thus, the air that the suction by the air suction device allows to flow toward the chip collection device along the inner surface of the discharge hole does not directly come into contact with the compressed air just discharged from the discharge opening. Thus, the air flow is not out of order around the discharge opening. This contributes to a reduction in the energy loss, an increase in the volume flow rate of the air flowing in the discharge hole, and an increase in the chip collection performance. This also contributes to an increase in the volume flow rate without replacing the air suction device with another device having high performance of discharging the compressed air. Thus, the cost is not increased.

According to the second aspect of the present disclosure, the inner surface and the outer surface of the ring-shaped protrusion allows the air flowing from the holding part toward the chip collection device to smoothly meet the compressed air discharged from the discharge opening. This contributes to a further reduction in the energy loss around the discharge opening.

According to the third aspect of the present disclosure, if the electrode tip that have been processed for welding passes through the through hole, and comes into contact with the through hole formation part unintentionally, the through hole formation part is deformed without heat distortion by the electrode tip. This prevents a failure in the device, and also prevents the chips from dropping out from the holding part to the outside of the cover case.

According to the fourth aspect of the present disclosure, the brush part is easily deformed by the electrode tip. Thus, when the electrode tip passes through the through hole, the brush part is easily moved out of the passage for the electrode tip, and does not block the electrode tip from passing through the through hole. In addition, when the end of the electrode tip is cut by the tip dresser, the gap between the circumference of the through hole and the electrode tip is covered by the brush part. This prevents the chips generated inside the cover case from dropping out from the gap between the circumference of the through hole and the electrode tip to the outside of the cover case. Further, almost all the region of the cover brush does not face the holding part because of the through hole formation part. This prevents the chips that move irregularly in the holding part from sticking to the brush part.

According to the fifth aspect of the present disclosure, when the electrode tip passes through the through hole, the electrode tip comes into contact with an end, of the brush part, remote from the base part. This allows the brush part to be deformed more easily. Thus, the brush part is likely to surround the side surface of the electrode tip without a gap. That is, the brush part securely blocks the gap between the circumference of the through hole and the electrode tip so that the chips are not dropped out from the gap to the outside of the cover case.

### BRIEF DESCRIPTION OF THE DRAWINGS

[FIG. 1] FIG. 1 is a perspective view of a chip collector of an embodiment of the present disclosure.
[FIG. 2] FIG. 2(a) is a cross-sectional view taken along line A-A of FIG. 1. FIG. 2(b) is an enlarged view of a section B of FIG. 2(a)
[FIG. 3] FIG. 3(a) is a plan view of the chip collector of the embodiment of the present disclosure. FIG. 3(b) is a view corresponding to FIG. 3(a), and illustrates that an electrode tip is passing through a through hole.

### DESCRIPTION OF EMBODIMENTS

The embodiment of the present disclosure will be described in detail with reference to the drawings. The following preferred embodiments are merely examples in nature.

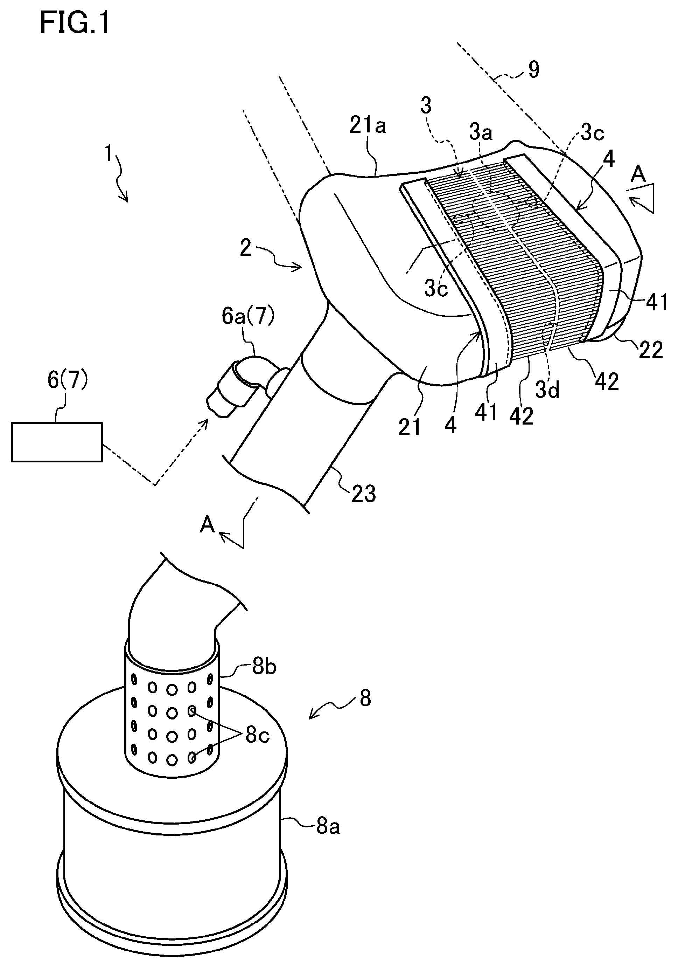

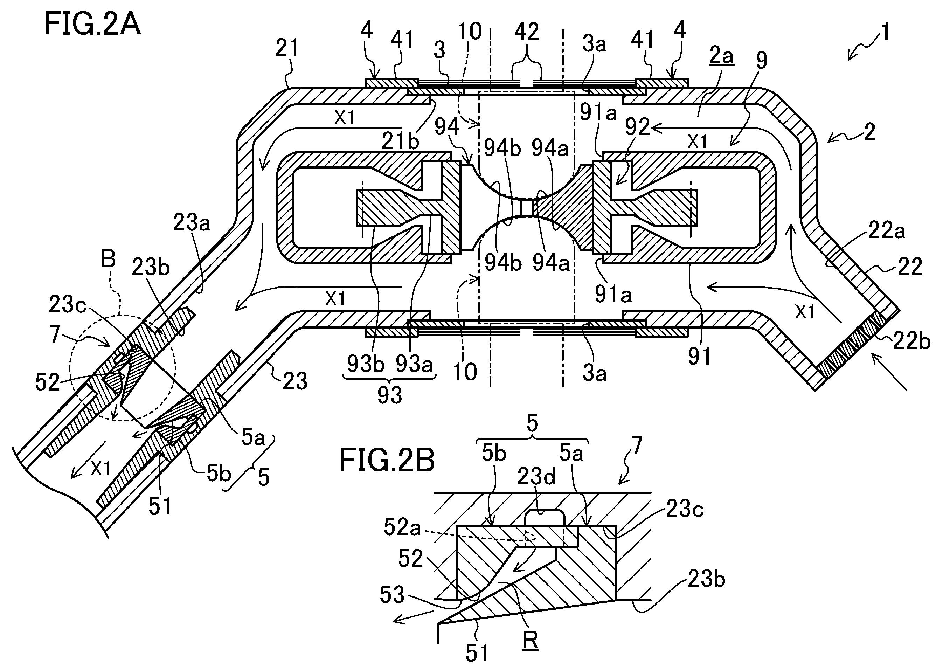

FIG. 1 illustrates a chip collector 1 of the embodiment of the present disclosure. This chip collector 1 collects the chips generated when an end of an electrode tip 10 (see FIG. 2(a)) for spot welding is cut by a tip dresser 9. The chip collector 1 includes a cover case 2 having a holding part 2a for holding a part of the tip dresser 9.

FIG. 2 also illustrates that the tip dresser 9 includes a horizontal, thick, flat casing 91. Communication holes 91a are disposed on an upper surface and a lower surface that are disposed on one side of the longitudinal direction of the casing 91. The communication holes 91a communicate with the inside of the casing 91, and face each other.

In a position that is in the casing 91 and corresponds to both the communication holes 91 a, provided is a ring-shaped output gear 92 having a rotation axis along the vertical direction. The output gear 92 is rotated by a servomotor and an input gear (both not shown).

On a periphery of the output gear 92, provided is a ring-shaped extension part 93 protruding outwardly and having a generally T-shaped cross section.

The ring-shaped extension part 93 includes a ring-shaped part 93a and an expansion part 93b. The ring-shaped part 93a protrudes outwardly, extends around the rotation axis, and has a thin thickness. The expansion part 93b expands vertically from a peripheral part of the ring-shaped part 93a. On a periphery of the expansion part 93b, provided are a plurality of teeth (not shown) in order around the rotation axis.

Inside the output gear 92, provided is a cutter 94 including a pair of curved surfaces 94a. One of the curved surfaces 94a faces upward, and the other one of the curved surfaces 94a faces downward. The curved surfaces 94a each includes a cutting edge 94b along the diameter of the end of the electrode tip 10.

When the servomotor (not shown) drives to rotate the output gear 92, the cutter 94 is rotated with the output gear 92. When the end of the electrode tip 10 is put on the rotating curved surfaces 94a each including the cutter 94, the cutting edge 94b cuts an end surface of the electrode tip 10.

The cover case 2 is generally rectangular in plan view, and includes a body 21 inside which the holding part 2a is disposed. On the back surface side of the body 21, provided is an opening 21a through which the communication hole 91a side (the one side of the longitudinal direction) of the tip dresser 9 is inserted into the holding part 2a.

An introduction pipe 22 and a discharge pipe 23 are provided on a lower surface of the body 21. The introduction pipe 22 communicates with the holding part 2a, and includes an introduction hole 22a for introducing air into the holding part 2a. The discharge pipe 23 communicates with the holding part 2a, and includes a discharge hole 23a for discharging air from the holding part 2a. The introduction pipe 22 is opposite to the discharge pipe 23 relative to a horizontal direction that intersects a direction along which the tip dresser 9 is inserted into the body 21. A distance between the introduction pipe 22 and the discharge pipe 23 is larger at a lower level.

The body 21 includes wide notches 21 b continuously extending along the upper surface, a front surface, and the lower surface of the body 21. The notch 21 b is covered by a flame-resistant, transparent, flexible resin sheet material 3 (a through hole formation part).

The sheet material 3 is a soft polyvinyl chloride film, and includes generally elliptical through holes 3a each disposed in a position corresponding to the two cutting edges 94b of the tip dresser 9. The electrode tip 10 can pass through the through holes 3a.

The sheet material 3 also includes a pair of first slits 3c for each of the through holes 3a. The pair of first slits 3c sandwich the through hole 3a, extend along the width direction of the sheet material 3, and opens to the through hole 3a.

The sheet material 3 also includes a second slit 3d. The second slit 3d disposed at the center of the width direction of the sheet material 3, and extends from the upper through hole 3a to the lower through hole 3a through the front surface of the body 21.

A pair of cover brushes 4 are provided on a surface, of the sheet material 3, remote from the holding part 2a, and covers all the surface of the sheet material 3.

The cover brushes 4 each include a base plate 41 (a base part) and a brush part 42. The base plate 41 (a base part) extends along an edge of the notch 21 b. The brush part 42 is made of a resin and attached on the base plate 41. The brush part 42 extends along a direction that intersects a direction along which the through hole 3a passes. The brush part 42 covers the through hole 3a.

The cover brushes 4 are provided so that a part, of the brush part 42 of one of the cover brushes 4, remote from the base plate 41 faces a part, of the brush part 42 of the other one of the cover brushes 4, remote from the base plate 41. The portions of the brush parts 42 facing each other correspond to the through hole 3a.

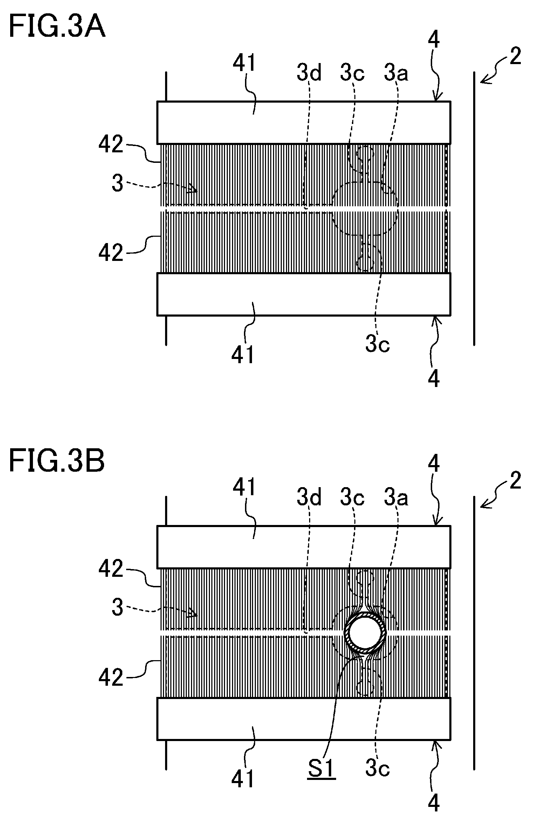

FIG. 3 illustrates that the electrode tip 10 is passing through the through hole 3a so that the end of the electrode tip 10 is cut by the tip dresser 9. During this case, the brush parts 42 are deformed, and covers a gap S1 between a circumference of the through hole 3a and the electrode tip 10.

FIG. 2 illustrates that a filter 22b is attached to an end of the introduction pipe 22. The filter 22b prevents unnecessary materials from entering the holding part 2a during air suction.

FIG. 2(a) also illustrates that a step surface part 23b is disposed on an inner surface of the discharge hole 23a of the discharge pipe 23. The step surface part 23b is raised inwardly to narrow the passing area for air.

FIG. 2(b) illustrates that a first ring-shaped recessed groove 23c is disposed in the middle of the step surface part 23b. The first ring-shaped recessed groove 23c extends around the center of the pipe. A part, of the step surface part 23b, remote from the holding part 2a forms a diameter that becomes larger at a position remote from the holding part 2a.

A second ring-shaped recessed groove 23d is also disposed in the middle of a bottom of the first ring-shaped recessed groove 23c. The second ring-shaped recessed groove 23d is narrow and extends around the center of the pipe.

FIG. 1 illustrates that an L-shaped pipe 6a is attached to an outer surface of the discharge pipe 23. The L-shaped pipe 6a includes an inside passage connected with the second ring-shaped recessed groove 23d. The L-shaped pipe 6a is also connected with an air compressor 6.

FIGS. 2(a) and 2(b) illustrate that a generally ring-shaped suction unit 5 is fitted in the first ring-shaped recessed groove 23c.

The suction unit 5 includes a first ring member 5a and a second ring member 5b. The first ring member 5a is positioned near the holding part 2a. The second ring member 5b is positioned remote from the holding part 2a. The second ring member 5b is fitted onto the first ring member 5a.

The first ring member 5a includes a first ring-shaped protrusion 51 provided remote from the holding part 2a. The first ring-shaped protrusion 51 protrudes in a direction away from the holding part 2a.

The first ring-shaped protrusion 51 forms a diameter that becomes smaller at a position remote from the holding part 2a, and is tapered and sharp-pointed.

On the other hand, the second ring member 5b includes a second ring-shaped protrusion 52 provided remote from the holding part 2a. The second ring-shaped protrusion 52 protrudes inwardly. The second ring-shaped protrusion 52 includes an inner surface disposed near the holding part 2a. This inner surface is gently curved so that the middle portion of the inner surface is positioned near the holding part 2a.

A plurality of air passing holes 52a are disposed on a periphery, of the second ring member 5b, near the holding part 2a. The plurality of air passing holes 52a extends along a direction that intersects the axis of the second ring member 5b.

The suction unit 5 including the first ring member 5a and the second ring member 5b fitted with each other provides an air passage space R1 between an outer surface of the first ring-shaped protrusion 51 and the inner surface of the second ring-shaped protrusion 52. The air passage space R1 is tapered in a direction away from the holding part 2a. A part, of the air passage space R1, remote from the air passing hole 52a serves as a discharge opening 53 for discharging the compressed air.

The air passing holes 52a also correspond to the second ring-shaped recessed groove 23d in a state in which the suction unit 5 is fitted in the first ring-shaped recessed groove 23c. The discharge opening 53 is also covered by the first ring-shaped protrusion 51 positioned on a part, of the inner surface of the discharge hole 23a (the inner surface of the step surface part 23b), from the discharge opening 53 toward the holding part 2a.

The air compressor 6, the L-shaped pipe 6a, the second ring-shaped recessed groove 23d, and the suction unit 5 form the air suction device 7 of the present disclosure. The compressed air is introduced from the air compressor 6 to the second ring-shaped recessed groove 23d through the L-shaped pipe 6a. Then, the compressed air passes through the air passing hole 52a and the air passage space R1. Then, the compressed air is discharged through the discharge opening 53 in a direction away from the holding part 2a. As a result, a part, of the discharge hole 23a, near the holding part 2a is placed under negative pressure. Then, the air in the holding part 2a is sucked, and discharged through the discharge hole 23a.

A chip collection unit 8 (a chip collection device) is provided on an end of the discharge pipe 23. The chip collection unit 8 collects chips that move with the air sucked by the air suction device 7.

The chip collection unit 8 includes a storage box 8a and a connection pipe 8b. The storage box 8a is generally cylindrical and stores chips. The connection pipe 8b connects the storage box 8a with the discharge pipe 23 so that the inside of the storage box 8a communicates with the discharge hole 23a of the discharge pipe 23. A plurality of air outlet holes 8c are provided on a side wall of the connection pipe 8b to dischrage the internal air to the outside.

Next, the operation of cutting the end of the electrode tip 10 by the tip dresser 9 will be described.

First, the servomotor (not shown) of the tip dresser 9 drives to rotate the output gear 92, and consequently rotate the cutter 94.

Then, the electrode tip 10 is moved and placed above the cutter 94 so that the axis of the electrode tip 10 is aligned with the rotation axis of the output gear 92.

Then, the electrode tip 10 is inserted into the through hole 3a. Then, as illustrated in FIGS. 3(a) and 3(b), the electrode tip 10 comes into contact with ends of parts, of the brush parts 42, remote from the base plate 41. Then, the brush part 42 are deformed, moved out of a passage for the electrode tip 10, and positioned above the gap S1 between the electrode tip 10 and the through hole 3a.

When the electrode tip 10 is inserted into the through hole 3a and approaches the cutter 94, the cutting edge 94b of the rotating cutter 94 comes into contact with the end of the electrode tip 10. Then, the cutter 94 rotates on the axis of the electrode tip 10 to cut the end of the electrode tip 10.

Next, the operation of collecting chips by the chip collector 1 will be described.

When the tip dresser 9 starts to cut the end of the electrode tip 10, the air compressor 6 is activated to allow the compressed air to flow into the second ring-shaped recessed groove 23d through the L-shaped pipe 6a.

Then, the compressed air passes through the air passing holes 52a, and also passes through the air passage space R1. Then, the compressed air is discharged from the discharge opening 53 to the discharge hole 23a in a direction away from the holding part 2a. As a result, the part, of the discharge hole 23a, near the holding part 2a is placed under negative pressure. Then, the air in the holding part 2a is sucked. Then, the air is introduced from the introduction hole 22a to the holding part 2a. Then, the air in the holding part 2a passes through the discharge hole 23a and flows into the chip collection unit 8 to generate an air flow X1.

The air flow X1 allows the chips generated during the cutting operation by the tip dresser 9 to move with the air toward the chip collection unit 8. While the air in the connection pipe 8b is discharged from the air outlet hole 8c, the chips are moved actively and collected in the storage box 8a.

According to the embodiment of the present disclosure described above, the first ring-shaped protrusion 51 covers the discharge opening 53. Thus, the air that the suction by the air suction device 7 allows to flow toward the chip collection unit 8 along the inner surface of the discharge hole 23a does not directly come into contact with the compressed air just discharged from the discharge opening 53. Thus, the air flow X1 is not out of order around the discharge opening 53. This contributes to a reduction in the energy loss, an increase in the volume flow rate of the air flowing in the discharge hole 23a, and an increase in the chip collection performance. This also contributes to an increase in the volume flow rate without replacing the air suction device 7 with another device having higher performance of discharging the compressed air. Thus, the cost is not increased.

In addition, the inner surface and the outer surface of the first ring-shaped protrusion 51 allows the air flowing from the holding part 2a toward the chip collection unit 8 to smoothly meet the compressed air discharged from the discharge opening 53. This contributes to a further reduction in the energy loss around the discharge opening 53.

Moreover, if the electrode tip 10 that have been processed for welding passes through the through hole 3a, and comes into contact with the sheet material 3 unintentionally, the sheet material 3 is deformed without heat distortion by the electrode tip 10. This prevent a failure in the chip collector 1, and also prevents the chips from dropping out from the holding part 2a to the outside of the cover case 2.

Furthermore, the brush part 42 is easily deformed by the electrode tip 10. Thus, when the electrode tip 10 passes through the through hole 3a, the brush part 42 is easily moved out of the passage for the electrode tip 10 in order to be a shape that does not block the electrode tip 10 from passing through the through hole. In addition, when the end of the electrode tip 10 is cut by the tip dresser 9, the gap S1 between the circumference of the through hole 3a and the electrode tip 10 is covered by the brush part 42. This prevents the chips generated inside the cover case 2 from dropping out from the gap S1 between the circumference of the through hole 3a and the electrode tip 10 to the outside of the cover case 2. Further, almost all the region of the cover brush 4 does not face the holding part 2a because of the sheet material 3. This prevents the chips that move irregularly in the holding part 2a from sticking to the brush part 42.

In addition, when the electrode tip 10 passes through the through hole 3a, the electrode tip 10 comes into contact with an end, of the brush part 42, remote from the base plate 41. This allows the brush part 42 to be deformed more easily. Thus, the brush part 42 is likely to surround the side surface of the electrode tip 10 without a gap. That is, the brush part 42 securely blocks the gap S1 between the circumference of the through hole 3a and the electrode tip 10 so that the chips are not dropped out from the gap S1 to the outside of the cover case 2.

In the embodiment of the present disclosure, the brush part 42 is made of a resin. Alternatively, the brush part 42 may be made of metal.

In addition, in embodiment of the present disclosure, the sheet material 3 is a polyvinyl chloride film. Alternatively, the sheet material 3 may be made of another material.

Moreover, in the embodiment of the present disclosure, the sheet material 3 is transparent. Alternatively, the sheet material 3 may be in another color.

### INDUSTRIAL APPLICABILITY

The present disclosure is suitable for a chip collector that collects chips generated when an end of an electrode tip for spot welding is cut by a tip dresser.

### DESCRIPTION OF REFERENCE CHARACTERS

- 1: Chip Collector
- 2: Cover Case
- 2a: Holding Part
- 3: Sheet Material (Through Hole Formation Part)
- 3a: Through Hole
- 4: Cover Brush
- 7: Air Suction Device
- 8: Chip Collection Unit (Chip Collection Device)
- 9: Tip Dresser
- 10: Electrode Tip
- 23a: Discharge Hole
- 41: Base Plate (Base Part)
- 42: Brush Part
- 51: First Ring-Shaped Protrusion
- 53: Discharge Opening
- 94b: Cutting Edge

## Claims

1. A chip collector for collecting chips generated when an end of an electrode tip for spot welding is cut by a cutting edge of a tip dresser, the chip collector comprising:
a cover case including
a holding part that holds the tip dresser, and
a discharge hole that communicates with the holding part and discharges air in the holding part;
an air suction device
including a discharge opening through which compressed air is discharged and which is disposed on an inner surface of the discharge hole,
discharging the compressed air through the discharge opening in a direction away from the holding part along the discharge hole,
placing a part, of the discharge hole, near the holding part under negative pressure,
sucking the air in the holding part, and
discharging the air through the discharge hole; and
a chip collection device
connected with the discharge hole, and
collecting chips that move with the air sucked by the air suction device, wherein
a ring-shaped protrusion
is provided on a part, of the inner surface of the discharge hole, from the discharge opening toward the holding part,
protrudes in a direction away from the holding part, and covers the discharge opening.

2. The chip collector of claim 1, wherein
the ring-shaped protrusion is tapered, and sharp-pointed.

3. The chip collector of claim 1 or 2, wherein
the cover case includes a through hole formation part having a through hole through which the electrode tip can pass,
the through hole is in a position corresponding to the cutting edge, and
the through hole formation part is made of flame-resistant, flexible resin sheet material.

4. The chip collector of claim 3, wherein
cover brushes are provided on a surface, of the through hole formation part, remote from the holding part,
the cover brushes each include a base part and a brush part attached to the base part,
the brush part extends along a direction that intersects a direction along which the through hole passes, and
the brush part covers the through hole.

5. The chip collector of claim 4, wherein
the cover brushes are provided in a pair so that a part, of the brush part of one of the cover brushes, remote from the base part faces a part, of the brush part of the other one of the cover brushes, remote from the base part, and
portions of the brush parts facing each other correspond to the through hole.
